# EUROPEAN PATENT APPLICATION

(11) **EP 2 544 414 A1**
(43) Date of publication of application: **09.01.2013**
(21) Application number: 10849267.9
(22) Date of filing: 08.04.2010
(51) Int. Cl.: H04L 12/56

(54) **METHOD AND DEVICE FOR STORING ROUTING TABLE ENTRY**

(71) Applicant: Huawei Technologies Co., Ltd., Shenzhen, Guangdong 518129 (CN)
(72) Inventor: GUO, Lingbo, Shenzhen Guangdong 518129 (CN); QIAN, Jun, Shenzhen Guangdong 518129 (CN)
(74) Representative: Pfenning, Meinig & Partner GbR
(86) International application number: PCT/CN2010/071635
(87) International publication number: WO 2011/124030

(57) **Abstract**

The present invention discloses a method and a device for storing a routing table entry. The method includes: splitting a routing table entry into two points according to a range matching policy, wherein the length of each point is equal to the length of the routing table entry; dividing each point into multiple segments, where the multiple segments at least include a first segment and a second segment, the first segment is a common part of the two points, and the second segment is a different part of the two points; obtaining a storage location of the routing table entry in a hierarchical binary tree, where the hierarchical binary tree includes a binary tree of each segment, and the binary tree of each segment at least includes a binary tree of the first segment and a binary tree of the second segment; and adding each segment related to the routing table entry to the binary tree of each segment according to the storage location, where the binary tree of the first segment points to the binary tree of the second segment by a pointer. According to the present invention, the routing table entry is stored in the hierarchical binary tree in segments, which significantly reduces the total amount of memory required to be occupied by storage of the routing table entry.

## Description

### FIELD OF THE INVENTION

The present invention relates to the field of computer technologies, and in particular, to a method and a device for storing a routing table entry.

### BACKGROUND OF THE INVENTION

A range matching algorithm is a key technology for a router, and mainly stores, searches, and upgrades data based on a tree structure of a binary tree. In the process of building the binary tree based on the range matching algorithm, a routing table entry is split into two points in the prior art, that is, a lowpoint (Lowpoint) and a toppoint (Toppoint), and then the lowpoint and the toppoint are respectively inserted into the binary tree according to a specific rule, where the size of each point of the binary tree is the size of a table entry. For example, the length of the table entry is 32 bit, and therefore the size of each point is 32 bit.

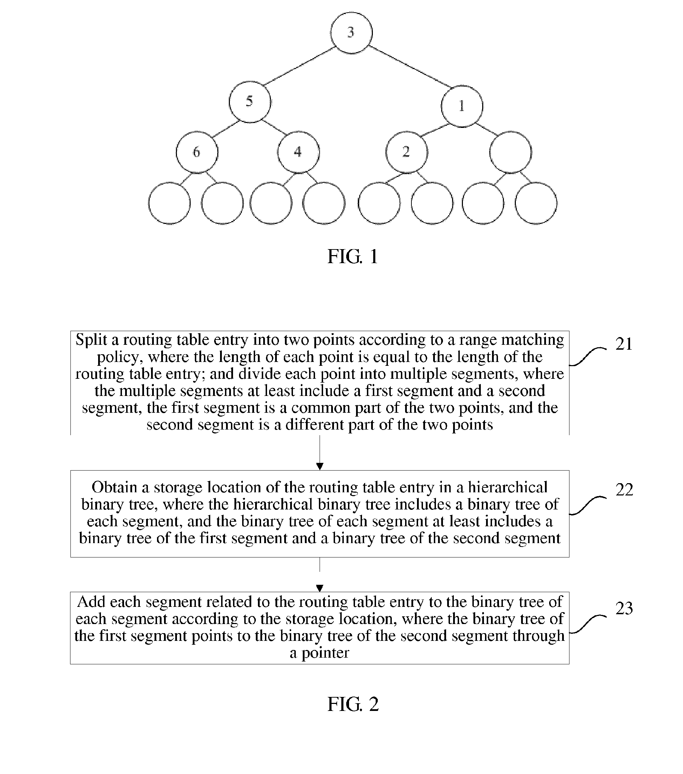

That a 4-layer binary tree is generated by IPv4 table entries each with a mask is taken as an example for illustration in the following. In Table 1, each is split into two points, that is, a lowpoint and a toppoint, and a range interval formed by the two points is used to represent a corresponding routing table entry with a mask. For example, the range interval formed by 192.0.0.0 - 193.0.0.0 is used to represent a table entry 192.0.0.0/8. In this way, 6 points may be obtained by splitting 3 IPv4 table entries each with a mask. According to an order of increasing from right to left, the 6 points are inserted into the binary tree, and a 4-layer binary tree as shown in FIG. 1 is generated.

**Table 1**

| Table Entry | Lowpoint | Toppoint |
|---|---|---|
| 192.0.0.0/8 | ① 192.0.0.0 | ② 193.0.0.0 |
| B:195.0.0.0/8 | ③ 195.0.0.0 | ④ 196.0.0.0 |
| C:192.168.0.0/16 | ⑤ 192.168.0.0 | ⑥ 192.169.0.0 |

In the process of implementing embodiments of the present invention, the inventor finds that: The size of each point of the binary tree in the prior art needs to be equal to the size of the table entry, when the size of the point of the binary tree becomes greater, the size of the memory occupied by the binary tree increases in direct proportion. For example: the length of an IPv4 table entry is 32 bit, the length of an IPv6 table entry is 128 bit, one table entry is split into two points in the prior art, in this way, if binary trees of the same layer are generated, for example, a 4-layer binary tree which includes 15 points as shown in FIG. 1 is generated, the storage space occupied by the IPv4 table entry is 32 bit*15=480 bit, the storage space occupied by the IPv6 table entry is 128 bit*15=1290 bit, it can be seen that, with the increase of the length of the table entry, the total amount of memory occupied increases in direct proportion.

### SUMMARY OF THE INVENTION

Embodiments of the present invention provide a method and a device for storing a routing table entry, which are used to reduce storage space required to be occupied by storage of a routing table entry.

An embodiment of the present invention provides a method for storing a routing table entry, where the method includes:
splitting a routing table entry into two points according to a range matching policy, where the length of each point is equal to the length of the routing table entry; and dividing each point into multiple segments, where the multiple segments at least include a first segment and a second segment, the first segment is a common part of the two points, and the second segment is a different part of the two points;
obtaining a storage location of the routing table entry in a hierarchical binary tree, where the hierarchical binary tree includes a binary tree of each segment, and the binary tree of each segment at least includes a binary tree of the first segment and a binary tree of the second segment; and
adding each segment related to the routing table entry to the binary tree of each segment according to the storage location, where the binary tree of the first segment points to the binary tree of the second segment by a pointer.

An embodiment of the present invention further provides a device for storing a routing table entry, where the device includes:
a table entry splitting module, configured to split a routing table entry into two points according to a range matching policy, where the length of each point is equal to the length of the routing table entry; and divide each point into multiple segments, where the multiple segments at least include a first segment and a second segment, the first segment is a common part of the two points, and the second segment is a different part of the two points;
a storage location obtaining module, configured to obtain a storage location of the routing table entry in a hierarchical binary tree, where the hierarchical binary tree includes a binary tree of each segment, and the binary tree of each segment at least includes a binary tree of the first segment and a binary tree of the second segment; and
a table entry storage module, configured to add each segment related to the routing table entry to the binary tree of each segment according to the storage location, where the binary tree of the first segment points to the binary tree of the second segment by a pointer.

In the embodiments of the present invention, the same segment of each point obtained by splitting the routing table entry according to the range matching policy is extracted as the common part, the different segment of each point is extracted as the different part, and the routing table entry is stored in the hierarchical binary tree in segments. According to the embodiments of the present invention, because there is no need to repeatedly allocate the storage space for the extracted common part, and the size of the storage space that the different part needs to occupy is smaller than the length of the routing table entry, the total amount of memory required to be occupied by the storage of the routing table entry is significantly reduced.

### BRIEF DESCRIPTION OF THE DRAWINGS

To illustrate the technical solutions according to the embodiments of the present invention more clearly, accompanying drawings for describing the embodiments are introduced briefly in the following. Apparently, the accompanying drawings in the following description are only some embodiments of the present invention, and persons of ordinary skill in the art may further obtain other drawings from the accompanying drawings without creative efforts.
FIG. 1 is a schematic diagram of a binary tree structure for storing a routing table entry in the prior art;
FIG. 2 is a flow chart of a method for storing a routing table entry according to an embodiment of the present invention;
FIG. 3 is a first example of a binary tree structure for storing a routing table entry according to an embodiment of the present invention;
FIG. 4 is a second example of a binary tree structure for storing a routing table entry according to an embodiment of the present invention;
FIG. 5 is a third example of a binary tree structure for storing a routing table entry according to an embodiment of the present invention; and
FIG. 6 is a schematic structural diagram of a device for storing a routing table entry according to an embodiment of the present invention.

### DETAILED DESCRIPTION OF THE EMBODIMENTS

The technical solutions according to the embodiments of the present invention are clearly and completely described in the following with reference to the accompanying drawings in the embodiments of the present invention. Apparently, the embodiments in the following description are merely part of rather than all of the embodiments of the present invention. All other embodiments obtained by persons of ordinary skill in the art based on the embodiments of the present invention without creative efforts shall fall within the protection scope of the present invention.

FIG. 2 is a flow chart of a method for storing a routing table entry according to an embodiment of the present invention. An executing subject of the embodiment of the present invention may be a router. As shown in FIG. 2, the method for storing a routing table entry according to this embodiment includes:

Step 21: Split a routing table entry into two points according to a range matching policy, where the length of each point is equal to the length of the routing table entry; and divide each point into multiple segments, where the multiple segments include at least a first segment and a second segment, the first segment is a common part of the two points, and the second segment is a different part of the two points.

Through Key value information and mask length information, the routing table entry may be represented as a range according to the range matching policy. For example: in the routing table entry of 1.1.1.1/24, 1.1.1.1 is the Key value information, 24 is the mask length information, the range represented by the routing table entry is the interval of 1.1.1.0 - 1.1.1.255, that is, a destination address in this interval is matched to 1.1.1.1/24. In this way, a routing table entry with a mask is split into a range interval represented by two points without the mask, where the length of each point is equal to the length, 24 bit, of the routing table entry.

After the routing table entry is split into the range interval represented by two points, each point is further split in segments. In the process of splitting in segments, the same segment of each point may be extracted, and the same segment is the common part of each point, that is, the first segment described in the embodiment of the present invention. For example, the top common part "1.1" of 1.1.1.0 and 1.1.1.255 is extracted as the first segment; the different segment of each point, where the different segment is the different part of each point, is the second segment described in the embodiment of the present invention. For example, the low different part "1.0" and "1.255" of 1.1.1.0 and 1.1.1.255 are extracted as the second segment. It should be noted that, according to the length of each segment, one or multiple first segments and one or multiple second segments may produced during the process of splitting a routing table entry, that is, the common part is divided into one or multiple segments, the different part is divided into one or multiple segments, and the specific implementation manner is not limited.

Step 22: Obtain a storage location of the routing table entry in a hierarchical binary tree, where the hierarchical binary tree includes a binary tree of each segment, and the binary tree of each segment includes at least a binary tree of the first segment and a binary tree of the second segment.

In the hierarchical binary tree, a top void and a low void that is adjacent to the top void form one binary tree, as shown in FIG. 1. After each point is divided into each segment, the binary tree of each segment may be determined according to a preset policy. The preset policy is, for example, a value of each segment filled in each hole of the hierarchical binary tree follows the policy of "the value of the segment filled in the hole on the higher level of the hierarchical binary tree is greater than the value of the segment filled in the hole on the lower level of the hierarchical binary tree, and the value of the segment filled in the hole on the left of the same level of the hierarchical binary tree is greater than the value of the segment filled in the hole on the right of the same level of the hierarchical binary tree ", or, a value of each segment filled in each hole of the hierarchical binary tree follows the policy of "the value of the segment filled in the hole on the higher level of the hierarchical binary tree is greater than the value of the segment filled in the hole on the lower level of the hierarchical binary tree, and the value of the segment filled in the hole on the right of the same level of the hierarchical binary tree is greater than the value of the segment filled in the hole on the left of the same level of the hierarchical binary tree", in this way, when the storage location of each segment related to a routing table entry in the hierarchical binary tree is being determined, a value of a segment needed to be added in the hierarchical binary tree is compared with a value of a segment already added in the hierarchical binary tree according to the preset storage policy, so as to determine the location of the binary tree corresponding to each segment needs to be added in the hierarchical binary tree, and the determined location of the binary tree corresponding to each segment is the storage location of the routing table entry related to the segments.

Step 23: Add each segment related to the routing table entry to the binary tree of each segment according to the storage location, where the binary tree of the first segment points to the binary tree of the second segment by a pointer.

After the storage location of each segment of the routing table entry is determined, each segment may be added to a corresponding binary tree, that is, each segment is filled in the void of the binary tree corresponding to the storage location of each segment. In this way, the storage of the value of each segment in the hierarchical binary tree is completed. Afterwards, link between each segment needs to be built, so that an information query may be performed through the hierarchical binary tree. Specifically, link between the content of each segment in the hierarchical binary tree may be established by pointer that is, when the information query is performed by using a hierarchical binary tree process, and if a current query pointer points to the content of the first segment added in the hierarchical binary tree, the current query pointer may be guided, according to preset pointer, to automatically jump from up to down along the hierarchical binary tree, that is, from the top to the low, so that the current query pointer points to the binary tree where the second segment is located from the binary tree where the first segment is located.

The adding each segment related to the routing table entry to the binary tree of each segment may include:
(1) When a first routing table entry is added to the hierarchical binary tree, the routing table entry is divided into multiple segments according to the method shown in step 21, the multiple segments include at least a first segment and a second segment, the binary tree of each segment is allocated for the first routing table entry, and the binary tree of each segment is inked by pointer. For example: the binary tree of the first segment and the binary tree of the second segment are allocated for the first routing table entry, two child nodes of the second segment are added to the binary tree of the second segment, the first segment is added to the binary tree of the first segment, and the binary tree of the first segment points to the binary tree of the second segment by a pointer. Therefore, the association between the first segment and the second segment of the routing table entry is built.

Because the second segment is formed by the different parts of two points, the second segment includes a low part of the first point and a low part of the second point, the low part of the first point and a corresponding low part of the second point are two child nodes which form the second segment. For example: the low parts "1.0" and "1.255" of 1.1.1.0 and 1.1.1.255 form the second segment, and the "1.0" and "1.255" are two child nodes of the second segment. The two child nodes included in the second segment are added to the binary tree of the second segment. For example, "1.0" and "1.255" are filled in the void of the binary tree of the second segment. For the specific locations of filling the two child nodes in the binary tree of the second segment, the two child nodes may be filled in the void of the binary tree of the second segment according to the preset policy, such as the policy of "the value of the child node filled in the hole on the higher level of the hierarchical binary tree is greater than the value of the child node filled in the lower level of the hierarchical binary tree, and the value of the child node filled in the hole on the left of the same level of the hierarchical binary tree is greater than the value of the child node filled in the hole on the right of the same level of the hierarchical binary tree" or the policy of "the value of the child node filled in the hole on the higher level of the hierarchical binary tree is greater than the value of the child node filled in the lower level of the hierarchical binary tree, and the value of the child node filled in the hole on the right of the same level of the hierarchical binary tree is greater than the value of the child node filled in the hole on the left of the same level of the hierarchical binary tree". The binary tree of the first segment points to the binary tree of the second segment by a pointer, that is, points to the top node of the binary tree of the second segment.
(2) When it is continued to add a routing table entry to the hierarchical binary tree, the routing table entry is divided into multiple segments according to the method shown in step 21, the multiple segments at least include a first segment and a second segment, and whether a binary tree of the first segment of the routing table entry needs to be added exists in the hierarchical binary tree is determined by searching according to a precision matching policy. If the binary tree of the first segment of the routing table entry needs to be added exists in the hierarchical binary tree, whether a binary tree of the second segment of the routing table entry needs to be added exists in the hierarchical binary tree is determined by searching according to the range matching policy. If the binary tree of the first segment of the routing table entry needs to be added exists in the hierarchical binary tree, but the binary tree of the second segment of the routing table entry needs to be added does not exist, the binary tree of the second segment of the routing table entry needs to be added is allocated in the hierarchical binary tree, two child nodes of the second segment of the routing table entry needs to be added are added to the newly allocated binary tree of the second segment, and the binary tree of the first segment points to the newly allocated binary tree of the second segment, so as to build association between the first segment and the second segment of the routing table entry needs to be added.

Further, according to the embodiment of the present invention, index information corresponding to the routing table entry may be stored in the hierarchical binary tree. The index information corresponding to each routing table entry may be determined according to actual needs, and the index information is used to indicate forwarding address information corresponding to the routing table entry. For ease of adding a new routing table entry in the hierarchical binary tree, according to the embodiment of the present invention, the index information is stored in the lowest layer of the hierarchical binary tree, and link between the routing table entry and the index information corresponding to the routing table entry is established by pointer. For example, the second segment of the routing table entry points to the index information corresponding to the routing table entry by the pointer.

An example that a routing table entry is divided into two points and each point is divided into two segments, that is, a first segment and a second segment, is taken for detailed illustration below.
1. Assume that a first routing table entry 192.168.0.1/32 is inserted into a hierarchical binary tree:
   (1) The routing table entry 192.168.0.1/32 with a 32-bit mask is divided into two points, that is, a lowpoint 192.168.0.1 and a toppoint 192.168.0.2. The lowpoint and the toppoint are both 32 bit in size.
   (2) The lowpoint 192.168.0.1 is divided into two segments, that is, a first segment of the lowpoint is 192.168 and a second segment of the lowpoint is 0.1, and the first segment and the second segment of the lowpoint are both 16 bit in size.
   (3) The toppoint 192.168.0.2 is divided into two segments, that is, a first segment of the toppoint is 192.168 and a second segment of the toppoint is 0.2, and the first segment and the second segment of the toppoint are both 16 bit in size.
   (4) A segment needs to be inserted into the hierarchical binary tree is determined, a storage location of the corresponding segment in the hierarchical binary tree is also determined, and the determined segment is inserted into the binary tree of the corresponding segment.

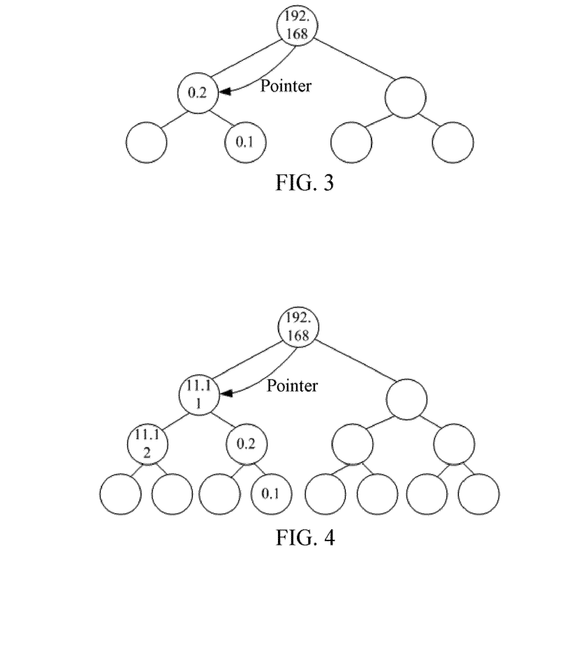

The second segment of the lowpoint and the second segment of the toppoint form the two child nodes of the second segment described in the embodiment of the present invention. Range matching comparison is performed on the second segment of the lowpoint and the second segment of the toppoint of the toppoint, and the second segment of the lowpoint 0.1 and the second segment of the toppoint of the toppoint 0.2 are inserted into the same binary tree, and the binary tree into which the second segment of the lowpoint 0.1 and the second segment of the toppoint 0.2 are inserted is called a binary tree of the second segment. For locations of the second segment of the lowpoint and the second segment of the toppoint in the same binary tree, insertion may be performed according to a preset insertion order, such as inserting according to the order of "the value of the segment filled in the child node on the left of the same level of the hierarchical binary tree is greater than the value of the segment filled in the child node on the right of the same level of the hierarchical binary tree" or the order of "the value of the segment filled in the child node on the left of the same level of the hierarchical binary tree is less than the value of the segment filled in the child node on the right of the same level of the hierarchical binary tree". An example of the generated binary tree is shown in FIG. 3.

Accurate comparison is performed on the first segment of the lowpoint 192.168 and the first segment of the toppoint 192.168, and when the two are the same, it is indicated that 192.168 is a common part of the first segment of the lowpoint and the first segment of the toppoint, 192.168 is inserted into a binary tree that is adjacent to the binary tree of the second segment, and the binary tree into which 192.168 is inserted is called a binary tree of the first segment.
(5) Association between the binary tree of the first segment into which 192.168 is inserted and the binary tree of the second segment into which 0.2 and 0.1 are inserted is built.

A pointer of the binary tree of the first segment points to the binary tree of the second segment, and in this way, the routing table entry 192.168.0.1/32 is added to the binary tree.
2. A routing table entry 192.168.11.11/32 is further added to the hierarchical binary tree:
   (1) The routing table entry 192.168.11.11/32 with a 32-bit mask is divided into two points, that is, a lowpoint 192.168.11.11 and a toppoint 192.168.11.12. The lowpoint and the toppoint are both 32 bit in size.
   (2) The lowpoint 192.168.11.11 is divided into two segments, that is, a first segment of the lowpoint is 192.168 and a second segment of the lowpoint is 11.11, and the first segment of the lowpoint and the second segment of the lowpoint are both 16 bit in size.
   (3) The toppoint 192.168.11.12 is divided into two segments, that is, a first segment of the toppoint is 192.168 and a second segment of the toppoint is 11.12, and the first segment of the toppoint and the second segment of the toppoint are both 16 bit in size.
   (4) A segment needs to be inserted into the hierarchical binary tree is determined, a storage location of the corresponding segment in the hierarchical binary tree is also determined, and the determined segment is inserted into the binary tree of the corresponding segment.

Accurate comparison is performed on the first segment of the lowpoint 192.168 and the first segment of the toppoint 192.168, and when the two are the same, whether a binary tree of 192.168 exists in the hierarchical binary tree is determined by searching; and when the binary tree of 192.168 exists in the hierarchical binary tree, the number of void points of a binary tree of the second segment to which the pointer of the binary tree of 192.168 points is obtained, that is, the number of void point of the binary tree into which 0.1 and 0.2 are inserted is obtained. If the number of void point is insufficient, that is, the number of void point is less than the number of the second segment, for example, if the number of void point is 1, but the number of second segment is 2, a new binary tree of the second segment is allocated, that is, the binary tree into which 0.1 and 0.2 are inserted is raised by one layer upward, and 11.11 and 11.12 are inserted into the binary tree in which 0.2 is located. An example of the generated binary tree is shown in FIG. 4.
(5) Association between the binary tree of the first segment in which 192.168 is inserted and the binary tree of the second segment in which 11.11, 11.12 and 0.2 are inserted is built.

A pointer of the binary tree of the first segment in which 192.168 is inserted points to the binary tree of the second segment in which 11.11, 11.12, and 0.2 are inserted, and in this way, the routing table entry 192.168.0.1/32 and the routing table entry 192.168.11.11/32 are added to the hierarchical binary tree.
3. Index information corresponding to the routing table entry is stored in the lowest layer of the hierarchical binary tree:

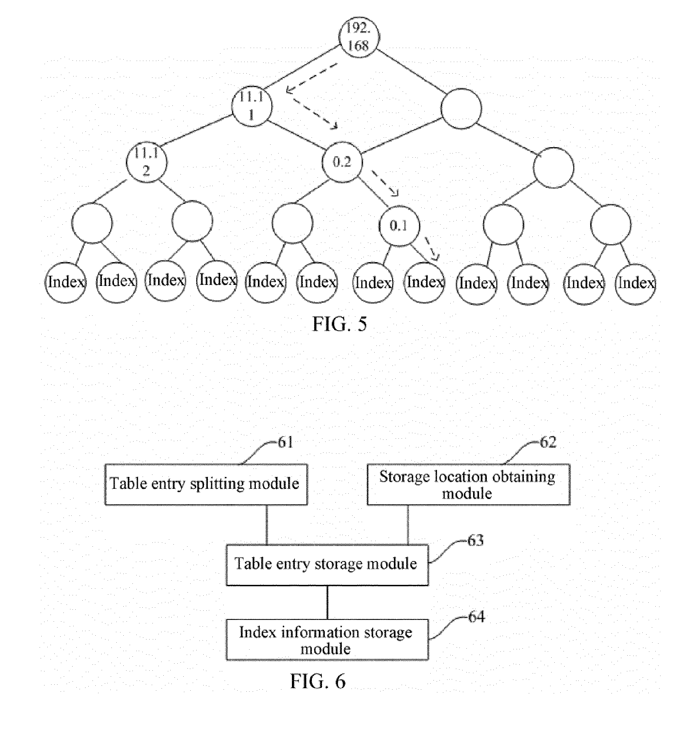

It may be predetermined that the lowest layer of the hierarchical binary tree is used to store the index information corresponding to the routing table entry, and an example of the generated binary tree is shown in FIG. 5. In actual application, in the process of building the hierarchical binary tree, the lowest layer of the hierarchical binary tree may be left empty, and after each segment of the routing table entry has been added to the hierarchical binary tree, the index information corresponding to the routing table entry is added to the lowest layer of the hierarchical binary tree, and link between the routing table entry and the index information corresponding to the routing table entry is established by pointer. For example: if in the process of building the hierarchical binary tree, an order of "the value of the segment filled in the child node on the left of the same level of the hierarchical binary tree is greater than the value of the segment filled in the child node on the right of the same level of the hierarchical binary tree" is followed for inserting each segment, then starting from the first segment of a routing table entry, the pointer points from the left to the right until the lowest layer of the hierarchical binary tree is reached, and the index to which the pointer finally points is the index corresponding to the routing table entry.

In the embodiment of the present invention, the routing table entry is stored in segments, that is, the routing table entry is split into two points according to the range matching policy, where each point is divided into multiple segments, the same segment of each point is extracted as the common part, the different segment of each point is used as the different part, and the common part and the different part are added to the hierarchical binary tree of each segment respectively, and link between the binary tree of the same segment and the binary tree of the different segment is established by pointer. In the embodiment of the present invention, because there is no need to repeatedly allocate the storage space for the extracted common part, and the size of the storage space that the different part needs to occupy is smaller than the length of the routing table entry, the storage space of the point in the range matching is reduced.

The embodiment of the present invention may be applied to the storage of a routing table entry of any length. When the length of the routing table entry is long, for example, the length of an IPv6 routing table entry is 128 bit, by adopting the policy of storing the routing table entry in segments, the total amount of memory required to be occupied by the storage of the routing table entry is obviously reduced compared to that in the prior art. The total amount of memory required to be occupied by the storage of an IPV6 routing table entry is taken as an example for comparative illustration. The length of an IPV6 routing table entry is 128 bit. By adopting the routing table entry storing method in the prior art, 2*128 bit memory space is required for storing an IPV6 routing table entry. By adopting the routing table entry storing method according to the embodiment of the present invention, only 3*64 bit memory space is required for storing an routing table entry. If multiple stored routing table entries have no duplicate part, n*128 bit memory space is required to store n routing table entries in the prior art, while 3*n*64 bit memory space is required to store n routing table entries in embodiment of the present invention, and in this case, the total amount of memory space required for storing the routing table entry according to the embodiment of the present invention is only 3/4 of that in the prior art. If multiple stored routing table entries have no duplicate part, for example, the top 64 bit of n routing table entries are all the same, only (2n+1)*64 bit memory space is required to be occupied for storing n routing table entries by adopting the routing table entry storing method according to the embodiment of the present invention, and the total amount of memory space required to be occupied is about 1/2 of that in the prior art. It can be seen that, by adopting the embodiment of the present invention to store the routing table entry, the amount of memory space required to be occupied by the storage of the routing table entry is significantly reduced.

After the hierarchical binary tree is generated by adopting the foregoing embodiment of the present invention, index information of a routing table entry may be searched based on the generated hierarchical binary tree. A searching process is described below with reference to FIG. 5.
(1) A pre-determined search key is split into multiple segments, the method for splitting the query routing table entry is the same as the splitting method when the routing table entry is inserted in the process of building the hierarchical binary tree. That the query routing table entry is split into two segments is taken as an example for illustration in the following. For example: an IPv4 query routing table entry 192.168.0.2 is split into a first segment and a second segment, the first segment is the top 16 bit "192.168" of the IPv4 query routing table entry 192.168.0.2, and the second segment is the low 16 bit "0.2" of the IPv4 query routing table entry 192.168.0.2.
(2) A sub tree which has a node same as the first segment is determined according to the searching policy of accurate matching.

Specifically, for the hierarchical binary tree with a sub tree having points satisfying left large right small, the first segment "192.168" is compared with the points of the hierarchical binary tree according to the searching policy of accurate matching to find a sub tree into which a same node is filled as the first segment "192.168. If the first segment "192.168" is greater than the current node, searching is performed along the left sub tree that is adjacent to the current node; if the first segment "192.168" is less than the current node, searching is performed along the right sub tree that is adjacent to the current node; if the first segment "192.168" is equal to the current node, the second segment is searched along a lower layer sub tree of the current point.
(3) Starting from the lower layer sub tree of the sub tree which has the same point as the first segment, the path of the pointer is determined according to the searching policy of range matching.

The second segment "0.2" is searched for in the next layer sub tree into which the first segment "192.168" point is filled. If the second segment "0.2" is greater than the current point, searching continues along a lower layer left sub tree that is adjacent to the current point; if the second segment "0.2" is less than the current point, searching continues along a lower layer right sub tree that is adjacent to the current point; if the second segment "0.2" equals to the current point, starting from current point to the right until the lowest layer of the hierarchical binary tree is reached, the index to which the pointer finally points is the index corresponding to the query routing table entry 192.168.0.2.

The path of the pointer during the searching process of the index information of the query routing table entry 192.168.0.2 is shown by the dashed line in FIG. 5. After the index information of the query routing table entry is determined based on the hierarchical binary tree, processing such as data forwarding may be performed according to the index information.

FIG. 6 is a schematic structural diagram of a device for storing a routing table entry according to an embodiment of the present invention. As shown in FIG. 6, the device for storing a routing table entry according to the embodiment includes: a table entry splitting module 61, a storage location obtaining module 62, and a table entry storage module 63.

The table entry splitting module 61 is configured to split a routing table entry into two points according to a range matching policy, where the length of each point equals to the length of the routing table entry; and divide each point into multiple segments, where the multiple segments include at least a first segment and a second segment, the first segment is a common part of the two points, and the second segment is a different part of the two points.

The storage location obtaining module 62 is configured to obtain a storage location of the routing table entry in a hierarchical binary tree, where the hierarchical binary tree includes a binary tree of each segment, and the binary tree of each segment includes at least a binary tree of the first segment and a binary tree of the second segment.

The table entry storing module 63 is configured to add each segment related to the routing table entry to the binary tree of each segment according to the storage location, where the binary tree of the first segment points to the binary tree of the second segment by a pointer.

On the basis of the foregoing technical solution, optionally, the storage location obtaining module may be specifically configured to, when the routing table entry is the first routing table entry inserted into the hierarchical binary tree, allocate the binary tree of the first segment and the binary tree of the second segment to the routing table entry, add two child nodes of the second segment to the binary tree of the second segment, and add the first segment to the binary tree of the first segment.

The storage location obtaining module may also be specifically configured to allocate the binary tree of the second segment of the routing table entry when the routing table entry is not the first routing table entry inserted into the hierarchical binary tree, the binary tree of the first segment of the routing table entry is found in the hierarchical binary tree according to a accurate matching policy, and the binary tree of the second segment of the routing table entry is not found according to a range matching policy. Correspondingly, the table entry storing module may be specifically configured to insert the second segment of the routing table entry into the allocated binary tree of the second segment, where the binary tree of the first segment points to the binary tree of the second segment by a pointer.

On the basis of the foregoing technical solutions, the device for storing the routing table entry may further include: an index information storage module 64. The index information storage module 64 is configured to store index information corresponding to the routing table entry in the lowest layer of the hierarchical binary tree, and make the binary tree of the second segment of the routing table entry point to the index information corresponding to the routing table entry by a pointer.

The device for storing a routing table entry in the embodiment of the present invention stores the routing table entry in segments, that is, the routing table entry is split into two points according to the range matching policy, where each point is divided into multiple segments, the same segment of each point is extracted as the common part, and the different segment of each point is used as the different part, and the common part and the different part are added to the hierarchical binary tree of each segment respectively, and link between the binary tree of the same segment and the binary tree of the different segment is established by pointer. In the embodiment of the present invention, because there is no need to repeatedly allocate storage space for the extracted common part, and the size of the storage space that the different part needs to occupy is smaller than the length of the routing table entry, the storage space of the point in the range matching is reduced. A implementing entity of the device for storing a routing table entry in this embodiment is not limited, and may be a router. For its implementation mechanism, reference may be made to the corresponding embodiments in FIG. 2 to FIG. 4, and is not repeatedly described here.

Person of ordinary skill in the art should understand that the accompanying drawings are merely schematic diagrams of preferred embodiments, and the modules or processes in the accompanying drawings may not be necessarily required in implementing the present invention.

Person of ordinary skill in the art should understand that modules in the device according to the embodiment may be distributed in the device of the embodiment according to the description of the embodiment, and may also make the appropriate changes to be disposed in one or more devices different from that of this embodiment. The modules of the foregoing embodiments may be combined into one module, and may also be further divided into a plurality of sub-modules.

The sequence numbers of the foregoing embodiments of the present are merely for the convenience of description, and do not imply the preference among the embodiments.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk or an optical disk.

Finally, it should be noted that the foregoing embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the present invention.

## Claims

1. A method for storing a routing table entry, comprising:
splitting a routing table entry into two points according to a range matching policy, wherein length of each point is equal to length of the routing table entry; and dividing each point into multiple segments, wherein the multiple segments comprise at least a first segment and a second segment, the first segment is a common part of the two points, and the second segment is a different part of the two points;
obtaining a storage location of the routing table entry in a hierarchical binary tree, wherein the hierarchical binary tree comprises a binary tree of each segment, and the binary tree of each segment at least comprises a binary tree of the first segment and a binary tree of the second segment; and
adding each segment related to the routing table entry to the binary tree of each segment according to the storage location, wherein the binary tree of the first segment points to the binary tree of the second segment by a pointer.

2. The method according to claim 1, wherein when the routing table entry is a first routing table entry inserted into the hierarchical binary tree, the obtaining the storage location of the routing table entry in the hierarchical binary tree comprises:
allocating the binary tree of the first segment and the binary tree of the second segment to the routing table entry, adding two child nodes of the second segment to the binary tree of the second segment, and adding the first segment to the binary tree of the first segment.

3. The method according to claim 1, wherein when the routing table entry is not a first routing table entry inserted into the hierarchical binary tree, the obtaining the storage location of the routing table entry in the hierarchical binary tree comprises:
allocating the binary tree of the second segment of the routing table entry when the binary tree of the first segment of the routing table entry is found in the hierarchical binary tree according to a precision matching policy, and the binary tree of the second segment of the routing table entry is not found according to a range matching policy.

4. The method according to claim 3, wherein the adding each segment related to the routing table entry to the binary tree of each segment according to the storage location comprises:
adding the second segment of the routing table entry to the allocated binary tree of the second segment, wherein the binary tree of the first segment points to the binary tree of the second segment by a pointer.

5. The method according to claim 1, further comprising:
storing index information corresponding to the routing table entry in the lowest layer of the hierarchical binary tree, and making the binary tree of the second segment of the routing table entry point to the index information corresponding to the routing table entry by a pointer.

6. A device for storing a routing table entry, comprising:
a table entry splitting module, configured to split a routing table entry into two points according to a range matching policy, wherein length of each point is equal to length of the routing table entry; and divide each point into multiple segments, wherein the multiple segments comprise at least a first segment and a second segment, the first segment is a common part of the two points, and the second segment is a different part of the two points;
a storage location obtaining module, configured to obtain a storage location of the routing table entry in a hierarchical binary tree, wherein the hierarchical binary tree comprises a binary tree of each segment, and the binary tree of each segment at least comprises a binary tree of the first segment and a binary tree of the second segment; and
a table entry storing module, configured to add each segment related to the routing table entry to the binary tree of each segment according to the storage location, wherein the binary tree of the first segment points to the binary tree of the second segment by a pointer.

7. The device according to claim 6, wherein,
the storage location obtaining module is specifically configured to, when the routing table entry is a first routing table entry inserted into the hierarchical binary tree, allocate the binary tree of the first segment and the binary tree of the second segment to the routing table entry, add two child nodes of the second segment to the binary tree of the second segment, and add the first segment to the binary tree of the first segment.

8. The device according to claim 6, wherein,
the storage location obtaining module is specifically configured to allocate the binary tree of the second segment of the routing table entry when the routing table entry is not a first routing table entry inserted into the hierarchical binary tree, the binary tree of the first segment of the routing table entry is found to exist in the hierarchical binary tree according to a precision matching policy, and the binary tree of the second segment of the routing table entry is not found according to the range matching policy.

9. The device according to claim 8, wherein,
the table entry storage module is specifically configured to insert the second segment of the routing table entry into the allocated binary tree of the second segment, and the binary tree of the first segment points to the binary tree of the second segment by a pointer.

10. The device according to claim 6, wherein,
an index information storage module is configured to store index information corresponding to the routing table entry in the lowest layer of the hierarchical binary tree, and make the binary tree of the second segment of the routing table entry point to the index information corresponding to the routing table entry by a pointer.
